# EUROPEAN PATENT APPLICATION

(11) **EP 1 662 720 A1**
(43) Date of publication of application: **31.05.2006**
(21) Application number: 04742022.9
(22) Date of filing: 22.06.2004
(51) Int. Cl.: H04L 12/56, H04L 12/28, H04L 12/46, H04L 12/44

(54) **METHOD OF SWITCHING PACKETS IN A TRANSMISSION MEDIUM COMPRISING MULTIPLE STATIONS WHICH ARE CONNECTED USING DIFFERENT LINKS**

(30) Priority: 28.07.2003 ES 200301780
(71) Applicant: Diseno de Sistemas en Silicio S.A., 46980 Paterna (Valencia) (ES)
(72) Inventor: BLASCO CLARET, Jorge, Vicente, E-46020 Valencia (ES); RIVEIRO INSUA, Juan Carlos, E-46019 Valencia (ES); RAMIRO MANZANO, ngel, E-46360 Bunol (ES)
(74) Representative: Ungria Lopez, Javier
(86) International application number: PCT/ES2004/000291
(87) International publication number: WO 2005/015855

(57) **Abstract**

Method of switching packets in a transmission medium comprising multiple stations which are connected using different links which is **characterized by** the establishment of different links (9, 10, 11 and 12) in the same or different media, with different communication characteristics in a single medium, and by a frame switching process associated with links.

Thanks to this it is possible to send frames from one set of equipment (2) connected to a transmission medium (1) to any other connected to that same medium (4, 5, 6 and 7), even though there is no direct link between them, with all the processing being carried out in level 2 of the OSI model.

## Description

### OBJECT OF THE INVENTION

As stated in the title of this specification, the present invention refers to a Method of switching packets in a transmission medium comprising multiple stations which are connected using different links.

This method is applicable to communication systems carrying out packet switching, and its primary objective is to permit total switching among all the stations of the communications system and increase the efficiency in transmissions to multiple stations.

### BACKGROUND TO THE INVENTION

In the development of remote networks, the ISO (International Standards Organization) developed a model known as OSI (Open System Interconnection), which establishes a hierarchy among all the elements of a network, from the one closest to the user to the one closest to the physical connection. The main developments in computer networks that have been made since then are based on this model.

So, seven levels are established, ordered from the one dealing with the physical medium to the one dealing with the user. Each of them has certain defined functions and the entities of each level deal with the immediately inferior level.

The lowest level of the model is the physical level (level 1), related to the physical connection; above this there is the data link level (level 2). This level operates above the physical level and is responsible for ensuring that the data is transmitted reliably by the transmission medium, as well as establishing an access mechanism to the physical level when the transmission medium is shared by various sets of equipment, known as stations, as in the case of local networks. It also considers the possibility of switching between two or more transmission media.

Included in this last aspect is what is known as "level 2 packet switching", also known as bridging. In this level, the packets are usually known as frames. A packet switch or bridge is used for segmenting the traffic among two or more networks (which will be known as segments), in such a way that the traffic for local use of one segment is not propagated to other segments, and it is even used for selecting the segment to which certain traffic is addressed among different segments. Switching is understood as being the process by which a set of equipment connected to various transmission media selects the most suitable transmission medium for each data packet to reach its destination. Any equipment or system capable of carrying out the switching process is known as a switch. A switch can be integrated into a set of communications equipment or station.

In the case of local networks, the standard ANSI (American National Standards Institute) / IEEE (Institute of Electrical and Electronic Engineers) Std 802.1D - MAC (Medium Access Control) Bridges describes the spanning tree bridge. This type of switch has two or more connections to the network, known as ports. Each of these ports is connected to a segment of network. The standard requires that each frame has a source address identifying the station originating it, and a destination address identifying the station to which it is directed. The source addresses of all the incoming frames are stored in a memory and are associated with the port via which they entered, and in this way the switch learns which is the port via which it can access each station. In this way, when a frame appears whose destination address is stored in the memory (in other words, it is known), the frame is sent solely via the port which has the destination address associated with it, always provided that this port is not the one through which the frame has entered, since in that case sending it via the other ports is of no use. When the destination address is unknown, the frame is sent via all the ports with the exception of the one it entered through, which ensures that the frame will reach its destination. An identical procedure is followed with the frames whose destination address is associated to the the set of accessible stations. A slightly different case occurs when the destination address of the frame is a group address, in other words, one that is associated with a subset of accessible addresses, in which case the frame will be sent to all the ports associated with stations included in that subset. The association of stations with one or another group is known by the switch by means of a protocol known as GMRP (GARP Multicast Registration Protocol, where GARP are the initials of Generic Attribute Registration Protocol) which establishes an exchange of messages for that purpose.

The memory in which this information needed for finding the destination for each frame is stored is known as a filtering table. Each of the inputs into the table is composed of:
- a destination address specification, and
- a map of ports, with a control element for each port establishing which process has to be carried out in relation to that port (in other words, whether sending should be done via that port to or not).

A distinction is drawn between static and dynamic inputs. The former are established by means of a management process which operates externally to the switch and the latter by means of an automatic process performed in the switch itself, as are the learning process or the GRMP protocol already mentioned. A characteristic of dynamic inputs is that they are subject to ageing, in such a way that at the end of a certain interval of time since the last time they were learned, they are eliminated, so that the switch can thereby respond to a changing distribution of the stations. On the other hand, static inputs always remain, unless they are eliminated by an external management process.

Given the risk of duplication of packets that exists in a network with various switches in which there exist loops, in other words, different possible paths between two stations, the spanning tree protocol is established. By means of this protocol the switches exchange messages in order to learn the topology of the network, and each switch blocks certain ports ignoring the traffic coming from them and not using them for transmitting frames, in such a way that the topology remains loop-free, in other words in tree form.

The following states are established for each port, ordered from more to less restrictive for the sending and receiving of frames:
- blocking: no frames are accepted neither is any learning carried out; nor are any frames sent. Just messages from the spanning tree protocol are accepted.
- listening: as in blocking except that messages from the spanning tree protocol are also sent.
- learning: incoming frames are accepted and learning is carried out, but frames are not sent (with the exception of messages from the spanning tree protocol).
- forwarding: frames are sent and received normally.

A port normally remains in a blocking state until it is determined that the sending and reception of packets by it does not involve loops in the topology. If this is not so, it passes successively through the states of listening, learning and forwarding, when certain timers elapse. In any of these states, if it is detected that the situation has changed and that sending frames through the port involves a topology with loops, then it goes over to blocking state.

There is a fifth state, the "disabled" state, in which the port is completely inactive. This state is reached and abandoned by an external management action.

Standard IEEE 802.1D was conceived on the assumption that the transmission media to which a switch was connected were media with bus topology or point to point links, in other words, transmission media in which all the connected stations have mutual visibility, in such a way that when a station sends a packet via that medium all the stations connected to that medium are able to receive the packet. However, in media in which there is no mutual visibility, this standard is not directly applicable since the fact of sending a packet via a transmission medium does not imply that all the stations connected to that medium are able to receive the packet.

For that reason, the IEEE establishes a generalization of the standard IEEE 802.1D in standard IEEE 802.1G ("remote bridging"). Remote bridging was originally introduced for the interconnnection of switches by point to point links, but in that standard it is generalized to any transmission medium and is independent of the real topology, obeying solely the communication capacity between different switches. Standard IEEE 802.1G establishes that the communication capacity between remote switches, in other words, between switches that are not communicated by local networks, is represented by virtual ports, with each of these ports representing the capacity to send and receive information from one or more other remote switches.

As in standard IEEE 802.1D in which the switches are connected to local networks, in IEEE 802.1G the remote switches are connected to entities known as groups and subgroups.

Given a virtual port in a switch, this switch and the switches which it can access via this virtual port would configure a subgroup. A subgroup is a two-way virtual link, and it could be considered as equivalent to a local network since each switch forming part of it is joined by a virtual port to the other ports of that subgroup.

Moreover, a group would be a set of subgroups in such a way that there also exists total and simple connection among all the switches of those subgroups; in other words, given any two switches in a group, there exists one and only one subgroup that joins them. A switch is joined to a group by a set of virtual ports, each of them giving access to each one of the subgroups. A group can be formed of a single subgroup, with the group receiving the name of virtual local network, a concept which must not be confused with the virtual local area network (VLAN).

It could be considered that a subgroup is physically equivalent to a link between two or more stations, and that a group would be a set of links permitting total and simple connection among a set of stations, but in reality the gathering into groups and subgroups does not necessarily reflect a physical topology but instead certain communication characteristics among stations, organized in the most suitable way.

As far as the loops are concerned that can be produced in this virtual topology established by the groups and subgroups, the problem is solved by means of certain characteristics of the switching and of the spanning tree protocol.

With regard to the possible loops inside a group formed by different subgroups, if there are no loops outside the group, then they do not represent a problem, due to a special characteristic consisting of the fact that a packet which has entered via a virtual port belonging to a group is never forwarded via a virtual port belonging to the same group.

In any case, it is possible that, external to a group, there are more groups (or local networks) which connect two (or more) switches of the group in a redundant way. If these alternative paths for the data have a lower cost than the paths within the group, then it is necessary to break the loop within the group, something which is achieved by distributing the switches of the group into two or more subgroups known as clusters. As a result, the packets cannot run in loops since they have to comply with the fact that, when a switch receives a packet coming from a cluster that is not its own, it must ignore that packet. In certain cases, the global efficiency of the network can be optimized by preventing packets being sent that are not going to be processed by the receiver, which is possible if a switch can know that it has an isolated port, in other words, one that is not connected to any other switch within the same cluster. In this case, the switch will leave that port in blocking state, avoiding having to use resources for sending via that port.

It is worth while specifying that in standard IEEE 802.1G the groups and subgroups are established statically, in other words, by a management action carried out by an entity external to the switch (whose functioning is not the object of the standard), while clusters are established dynamically, in the switches themselves, by means of executing the modified spanning tree protocol.

The present invention solves the said drawback of standard IEEE 802.1D (the non-applicability to transmission media with total mutual vision) by introducing certain modifications into the switching process but at the same time maintaining the basic functionality of the standard. The functionality which the standard establishes is a subset of that established in this present invention.

In regard to the relation with standard IEEE 802.1G, which tries to solve the same problem, the present invention starts from the same principle, which is the use of virtual ports, but these represent links via which information can be sent to other stations, and they can be two-way or not, in such a manner that they do not represent communication capacity but instead transmission capacity. There can also be more than one link between the same stations and furthermore these links can overlap totally or partially.

This redundancy of links is not necessarily completely eliminated by the spanning tree protocol (which in the present invention is only applied on certain links), and it can be exploited by virtue of the different physical characteristics of these redundant links, with some links or others being chosen for transmission depending of the requisites of the different types of traffic. Also, this redundancy can be exploited by virtue of the different topological characteristics of the redundant links: it is possible for packets addressed just to one station to go via a link that communicates with that station, and packets addressed to that came station and to other stations use a link which communicates with that station and other stations, if it is possible to establish those links in a medium.

In short, the physical characteristics of the transmission medium and the topology of the network that can be established on it are much more integrated into the switching process, which can be exploited in order to increase the global efficiency of the network, as will be seen in some of the examples of application.

Moreover, other modifications are made aimed at reducing the traffic of broadcast and multicast packets in a switched network, thereby increasing the efficiency of it and that of the switch.

In the present document the term station refers to a set of equipment connected to the network capable of sending data via it and receiving data from it.

The term VLAN (Virtual Local Area Network) is used to refer to the virtual local area networks established in standard IEEE 802.1Q, into which a real local network can be divided. It is advisable not to confuse this term with virtual local network, established by standard IEEE 802.1G for referring to groups consisting of a single subgroup.

### DESCRIPTION OF THE INVENTION

In order to achieve the objectives and avoid the drawbacks indicated in the above section, the invention consists of a packet switching procedure in a transmission medium with multiple stations connected by means of different links. In that medium a switching is carried out of frames (packets) in level 2 of the OSI (Open System Interconnection) model of the ISO (International Standards Organization), and each station performs packet switching. The switching is done between one or more transmission media. The procedure of the invention is characterized in that in each of the transmission media different links are established which directly connect stations present in that medium, where said stations have switching capacity. Also, between any two stations there can be various links with different characteristics in the same transmission medium, and the links, independently of their belonging to the same medium, can be one-way point-point or point-multipoint. The procedure is also characterized in that it establishes that a two-way point-point link is a set of links consisting of two one-way point-point links joining the same stations but in opposite directions, a two-way multipoint-multipoint link between a set of stations is the union of as many point-multipoint links as there are stations belonging to that set, with each point-multipoint link having as its source each one of the stations of the set and as its destination the other stations of the set; the one-way links, independently of whether they belong to the same transmission medium, can have different characteristics of channel coding, security and quality of service independent of each other and dependent on the transmission medium; and for the frame switching process, each switch has virtual ports, directly associated in a one-to-one way with the links that can provide transmission, whether they be two-way, as established in standard IEEE 802.1G, or one-way outgoing.

Thanks to this procedure, frames can be sent from a station connected to a transmission medium to any other connected in that same medium, even if there is no direct link among them, with the entire processing being carried out in level 2 of the OSI model.

The procedure of the invention performs the switching by means of the application of standard IEEE 802.1D, and is characterized in that it selects certain links as primary links, which are the minimum two-way links necessary for connecting with each of the accessible stations; and it takes as the input port in the switching of each frame the one associated with the link via which the frame has entered, always providing that this is a primary link, otherwise it takes the one associated with the equivalent primary link, in other words, the one associated with the primary link that communicates with the station from where the frame came, in such a way that if there exist two or more primary links communicating with the station from where the frame came, the primary link whose associated port is in the forwarding state will be chosen, if that link exists, or otherwise any link will be chosen.

The ports of the primary links are for all purposes considered as connection ports to the local network and only on these ports is the spanning tree protocol applied in its entirety, as established in standard IEEE 802.1D, with the rest of the links being excluded from the sending of packets of the spanning tree protocol.

As was described in the section on the background of the invention, the possible states of a port are blocking, listening, learning, forwarding and disabled. The procedure of the invention is furthermore characterized in that the state of the port associated with a non-primary link of any type is equal to the most restrictive state, with regard to the sending and receiving of packets, of all the states of the ports of the primary links equivalent to that link, in other words, of the states of the ports of the primary links which communicate with the same stations as that non-primary link. In this way, the non-primary link will form part of the tree if and only if the primary links equivalent to it form part of the tree.

Moreover, the state for a port associated with a point to multipoint link is always forwarding, with the state of the ports associated with these same links being periodically communicated via the primary point to point links equivalent to that point-multipoint link so that this information can be processed by the destination stations; in such a way that if they are informed that the port associated with the link in the source station is in blocking state they leave the port via which they have received the information in listening state if the stations act as a switch, or they eliminate the frames coming from the station with which the link communicates if the stations do not act as a switch; thereby avoiding the processing in these stations of the packets sent by the point-multipoint port, since these are processed at destination as coming from the port associated with the equivalent primary link if the receiver station acts as a switch.

In order to improve the broadcast of messages, the procedure specifies that each frame carries a list of identifiers, where each identifier is associated one-to-one with a switch through which the frame has passed, this list being known as broadcast control information.

A switch eliminates the received frame when the identifier of that switch is found in the broadcast control information of that frame, thanks to which certain packets are eliminated which otherwise, due to having been diffused via a network with loops, would remain indefinitely in that network.

For this reason, the procedure specifies that the switch adds its own identifier to the broadcast control information of the frame in the event that it does not find its own identifier in the broadcast control information of that frame.

Furthermore, the procedure applies a consultation processing of a filtering table, as was described in the background to the invention, and is characterized in that two new specifications are incorporated into each of the static filtering table inputs of standard IEEE 802.1D, these specifications being that of input port, referring to the port through which the frame has entered, and the VLAN ID specification, referring to the identifier of the VLAN to which the frame belongs, according to standard IEEE 802.1Q; the processing indicated by the port map in the the entry of the table being applied if the frame, in addition to the specification established in the MAC address of standard IEEE 802.1D, also complies with the cited specifications for input port and VLAN. In that filtering table, a first new value is used not present in standard IEEE 802.1D, and can be used in any of the specifications of the static entries of the filtering table, whether they be specifications of MAC address, input port or VLAN ID, in such a way that when the value of that characteristic in a frame is compared with that of a specification which has that first new value, the comparison is always met, in other words, the specification is met and the processing which the input establishes is applied.

Also in that table, a second new value is used not present in standard IEEE 802.1D, in any of the specifications of the static entries of the filtering table, in such a way that when the value of that characteristic of the frame is compared with that of a specification which has that second new value, the comparison is met, in other words, the specification is met, if the value in the frame does not coincide with that of any other specification of the table, with the exception of those containing the actual second new value, and the processing which the input establishes is applied.

Given an entry in a table establishing the sending via more than one port, the destination ports of that input are ports associated with primary links, or ports associated with point-multipoint links equivalent to those primary links.

Below, in order to facilitate a better understanding of this specification and forming an integral part thereof, some figures are included in which the object of the invention has been represented in a manner that is illustrative rather than limiting.

### BRIEF DESCRIPTION OF THE FIGURES

**Figure 1.-** Represents an example of embodiment in which an external entity accesses the transmission medium via a switch.
**Figure 2.-** Represents, along with figure 3, the relation between a two-way link and two one-way links in the opposite direction.
**Figure 3.-** Represents, along with figure 2, the relation between a two-way link and two one-way links in the opposite direction.
**Figure 4.-** Represents, along with figure 5, the grouping of links in a two-way multipoint-multipoint link.
**Figure 5.-** Represents, along with figure 4, the grouping of links in a two-way multipoint-multipoint link.
**Figure 6.-** Represents an example of application of the procedure of the invention in communications among a series of switches.
**Figure 7.-** Represents an example of application where the primary links are observed.
**Figure 8.-** Represents an example of embodiment where the assignment of input ports is carried out.
**Figure 9.-** Represents another example of embodiment where the assignment of input ports is carried out.
**Figure 10.-** Represents an example of embodiment in which the application of broadcast control is observed.
**Figure 11.-** Represents an example of embodiment in which the point-point and point-multipoint links are maintained for different links.
**Figure 12.-** Represents the same example of embodiment of figure 11 where the functioning of the broadcast control is observed.
**Figure 13.-** Represents an example of embodiment similar to that of the previous figure but in which there exists an additional link.
**Figure 14.-** Represents, together with figure 15, the comparison of a bus with a two-way multipoint link.
**Figure 15.**- Represents, together with figure 14, the comparison of a bus with a two-way multipoint link.

### DESCRIPTION OF VARIOUS EXAMPLES OF EMBODIMENT OF THE INVENTION

Given below is a description of various examples of embodiment of the invention, making reference to the numbering adopted in the figures.

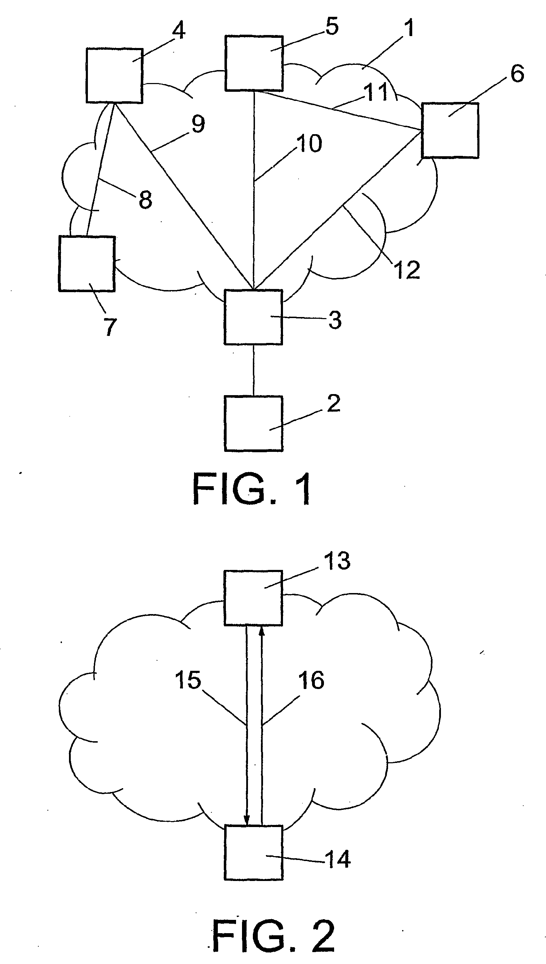

In a first example, a transmission medium (1) is provided which can be accessed by a switch (2) by means of an external entity (3) functioning in the medium as a station. In the transmission medium there are different links (8, 9, 10, 11 and 12) among the different stations (3, 4, 5, 6 and 7), which are independent of each other and can have different characteristics, as can be seen in figure 1.

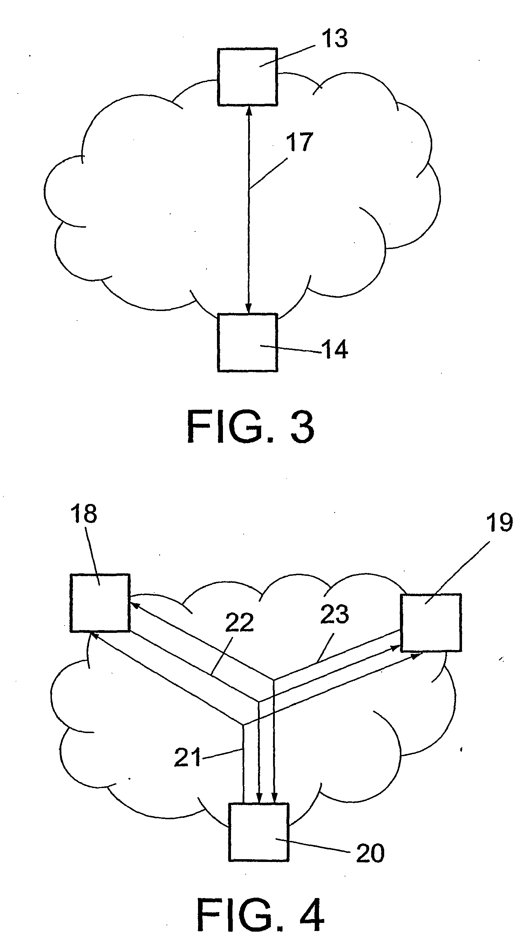

In a second example, two stations (13 and 14) are provided in a medium (1), and two one-way point to point links (15 and 16) joining them. Link (15) would be used for sending information from (13) to (14). Link (16), on the other hand, would be used for sending information from (14) to (13), as appears in figure 2. As the two stations are joined by two one-way point to point links with opposite directions, these links can be grouped to form a single two-way link (17) which makes it possible to transmit information in both directions, as shown in figure 3.

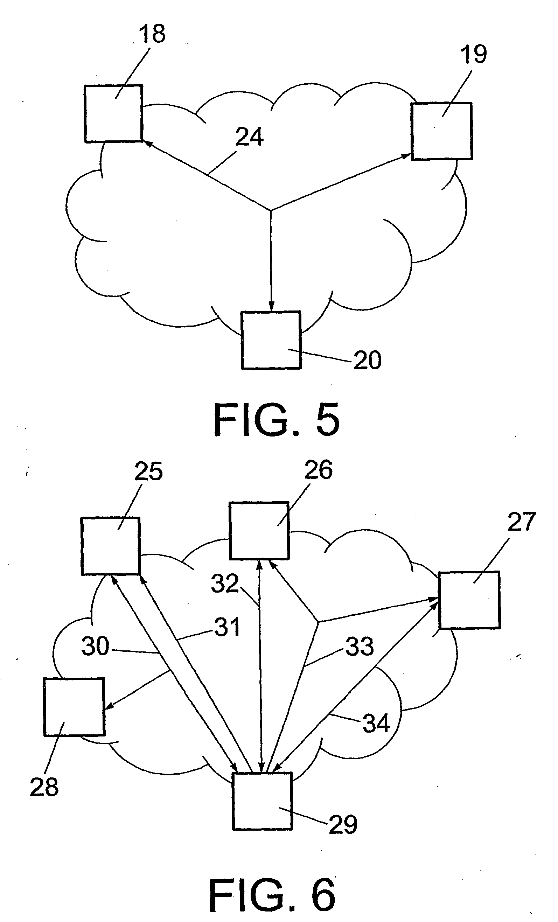

In a third example, three stations (18, 19 and 20) are provided communicated by three one-way point-multipoint links: (21) which permits transmission from station (20) to stations (18) and (19); (22) which permits transmission from station (18) to stations (19) and (20); and (23) which permits transmission from station (19) to stations (18) and (20), as appears in figure 4. These three links can be grouped into a single two-way multipoint-multipoint link, which in this example of embodiment is link (24), as a result of which any of the three stations can transmit to the other two stations, as shown in figure 5.

A fourth example shows the different types of link that there can be in a transmission medium once the one-way links have been grouped into two-way links: we have five stations (25, 26, 27, 28 and 29) in the medium and five links (30, 31, 32, 33 and 34). Link (30) is two-way multipoint-multipoint and communicates three stations (25, 28 and 29), with which any packet sent by one station reaches the other two sharing the link. Link (31) is one-way point-point and permits transmission of packets from station (29) to station (25). Link (32) is two-way point-point and communicates the stations (26) and (29) for transmission and reception of frames. Link (33) is point-multipoint and communicates the stations (29), (26) and (27). When station (29) sends a packet via this link it will be received by the stations (26) and (27). Link (34) is point to point two-way, and communicates stations (27) and (29), as can be seen in figure 6.

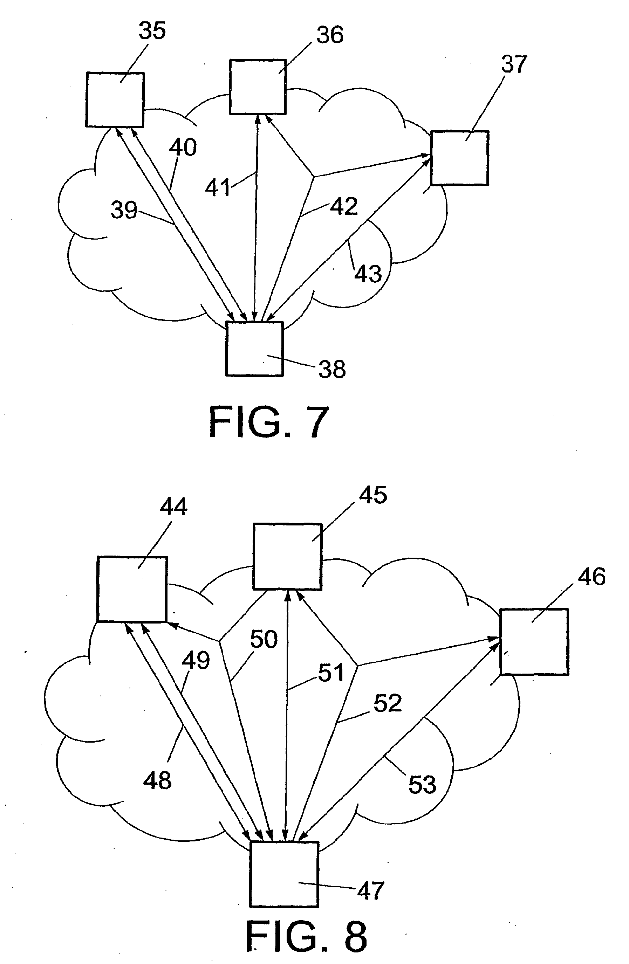

In a fifth example, some cases of links between one station and others in the same transmission medium are represented. Station (38) communicates with station (35) by means of two two-way links (39 and 40), of independent characteristics. On the other hand, it has separate two-way links (41 and 43) which communicate with stations (36) and (37). It also communicates with these stations by means of the link (42), which is point-multipoint one-way. What occurs is that sending a packet via the link (42) is equivalent to sending it via the links (41) and (43), so it can be said that the link (42) is equivalent in transmission to the links (41) and (43), as can be seen in figure 7.

Described below is a first example of assignment of input ports for incoming packets, which can be seen in figure 8. In that example, there exists a series of links (48, 49, 50, 51, 52 and 53) which a switch can access from a station (47), which in this case is inside the station. The links (48) and (49) are two-way point to point and communicate with the station (44) with different communication parameters. For its part, the station (45) has a one-way point-multipoint link (50) via which it can transmit frames to the stations (44) and (47). Moreover, link (52) is one-way point-multipoint and permits station (47) to transmit frames to stations (45) and (46). Finally, the two-way point to point link (53) connects station (47) to (46).

In the switch for the station (47) a port is assigned to each of the outgoing links, in other words, to the links which are two-way or one-way for transmission, namely, links (48, 49, 51, 52 and 53) of figure 8. Link (50) does not have an associated port due to being purely an incoming link. In this example of embodiment and in the rest of the examples, for purposes of simplification, the numbering of the ports associated with each link is associated with the number used in the corresponding figure for that link.

In the switch of station (47), the minimum two-way links necessary for reaching all the stations with which it has direct connection are taken as being the primary links, with one primary link being associated with each accessible station. In this case there is no unique solution: there exist two sets of links meeting this condition, so that we could take links (48), (51) and (53) as the primary links, or links (49), (51) and (53). In this example of embodiment, this latter group is taken (which can be decided by the identifying number of the ports or any other method).

So, in the switch of station (47), all the incoming packets are processed by the switch as coming from primary links: those coming from the primary links (49), (51) and (53) directly, associating them with the corresponding ports, and for the rest of the incoming links, depending on the station that they come from, with the port associated with the corresponding primary link being assigned to them as the input port. In this case, the choice of the corresponding primary link is direct since there do not exist two primary links communicating with the same station.

Therefore, the packets entering via the link (48), coming from the station (44), are assigned the port (49), which is the one associated with the primary port communicating with the station (44). Those entering via the link (50) come from the station (45), and they are assigned the port (51), which is the one associated with the primary port communicating with the station (45), as shown in figure 8. These associations of links and ports will be used during the learning process of standard IEEE 802.1D, which is known in the state of the art and was described in the background to the invention.

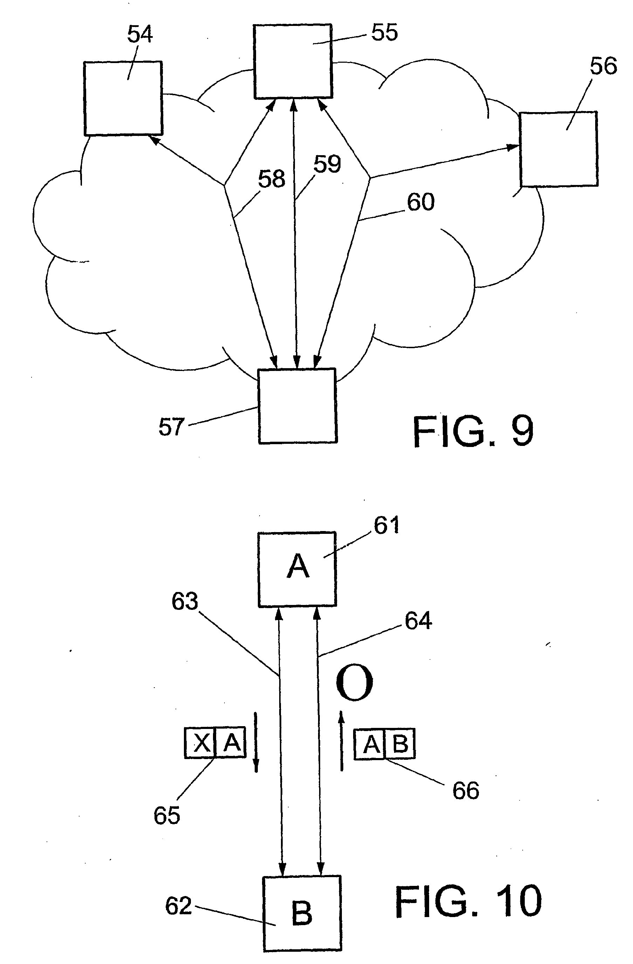

A second example of assignment of ports to incoming packets, which can be seen in figure 9, has a different topology, in which there exist four stations (54, 55, 56 and 57), and are joined by two multipoint two-way links. One of them (58) communicates with stations (54), (55) and (57) and the other (60) joins stations (55), (56) and (57), in addition to a point to point two-way link (59) joining the stations (55) and (57).

In station (57) ports are assigned to links (58), (59) and (60), since they are outgoing. The primary links will be links (58) and (60), both multipoint. So, these will be the incoming ports that are used. The assignment of input ports to the frames is obvious for those coming via the links (58) and (60), but for link (59), which is not primary, a choice has to be made between (58) and (60). The link that is not in blocking state will be the one chosen as equivalent. There can only be one in a less restrictive state than blocking since this would otherwise imply a loop created by a message successively travelling via station (57), link (60), station (55), link (58) and station (54), something which is prevented with the application of the spanning tree protocol in this example of embodiment of the invention. In the event that both links are in blocking state, it does not matter which one is chosen for packets entering via link (59): obviously none of these packets will be processed since the link assigned to it is in a blocking state and, moreover, no learning at all will be done.

Described below is an example of packet transmission, based on a topology like that of the first example of incoming port assignment which was described with the aid of figure 8. As a result of the learning process, appearing in the dynamic inputs of the filtering tables will be the ports associated with the links (49), (51) and (53). In this way, once the switching has been performed, the associated links for that ports are used, with which the packets will be correctly sent via the necessary links for reaching their destination.

The rest of the ports (48 and 52) will not appear in these inputs as a result of the learning process which, as we have stated earlier, is known in the state of the art, but they can indeed be incorporated into the table as static or dynamic inputs (which were described in the section on background to the invention), by means of maintenance processes of other protocols. In this way, all the links can be used for transmission.

As far as the spanning tree protocol is concerned, it would be applied in its entirety, as it appears in standard IEEE 802.1D, only on the ports associated with the primary links (48, 51 and 53) .

The other ports, associated with the links (48) and (52), are not associated with a primary link, and are therefore excluded from the spanning tree in its entirety. Nevertheless, each of these ports has a state associated with it with regard to the sending and reception of packets, as established by standard IEEE 802.1D, which needs to be calculated.

For the calculation of these states, it is necessary to know which link is associated with each port and which are the primary links equivalent to this link (in other words, the primary links necessary for arriving at the same destinations). In the case of link (48), said link has station (44) as its destination, which can be reached with the primary link (49). Therefore, the primary link equivalent to the link (48) would be the link (49). For the link (52), the associated primary links are the links (51) and (53), since the same stations are reached via them: (45) and (46).

Once the equivalent links of the non-primary links have been determined, the corresponding states are calculated, depending on the type of these non-.primary links.

In the case of point-point non-primary links, the state of the port is exactly equal to the state of the port of the equivalent primary link. So, port (48) would have the same state as port (49). In this way, if the link (49) is included in the tree, so too is (48) and the same if it is not included.

In the case of point-multipoint links, there are two options.

The first option is that the state is the most restrictive of the states of the ports associated with the equivalent links. So, in the case of the state of the port (52) it will depend on the states of the ports associated with the equivalent primary ports (51) and (53). If one of these ports is in a blocking state, the state of the port (52) will be blocking. For the port (52) to be in forwarding state it is necessary for the ports (51) and (53) to be in forwarding state. Note that the states of listening and learning are equivalent to the state of blocking in port (52), since the link is outgoing only and no packet is received by this port. Also, no messages on the spanning tree protocol are sent by it since it is not associated with a primary link.

As a consequence of all this, the link (52) will be in the tree if and only if the equivalent primary links (51) and (53) are so. In this way, if the link (53), for example, is not in the tree, no link is established with the station (46) by the link (52), thereby breaking the tree, since this link would have the port in blocking state.

The second option for point-multipoint links consists of assigning the forwarding state to the port always. As a consequence of this, the port (52) will always be in forwarding state, independently of the states of the links (51) and (53). In no case does this imply a break of the tree. Let us assume that the port (53) is in forwarding state but (51) is in blocking state. In this case the station (47) needs to inform the station (45) that it has the port corresponding to the link (51) blocked, with which this link will be excluded from the tree. Until the station (45) has been informed that the state of this link has changed, it will eliminate all the packets coming via the link (51).

If packets are sent via the link (52) they will arrive at station (46), which is not a problem since it would be equivalent to having been sent via the link (53), which is in the tree. They will also arrive at the station (45) but this station will process them as if they had been sent by link (51) (since it will have the same associated port).

Note that in this way the topology of the tree can have redundant branches; in fact, even using the first option (the most restrictive one) with regard to the states of the point-multipoint links, if the links (49), (51) and (53) are in the tree the links (43) and (47) provide alternative paths for the packets. This could imply a risk of duplicating packets, but there exists the possibility of excluding these links from the forwarding of unknown destination packets by means of including an input for it in the filtering table with a new value corresponding to the second new value introduced in the description of the invention, known as "not found" value, in the specification of the MAC address and a list of restricted ports in the specification of destination ports. This input will be applied for all unknown destination packets, with which when these packets are sent via a limited number of ports the possibility of duplicated packets is reduced and there also exists an additional control mechanism over duplicated packets capable of totally eliminating packets running in loops occasioned by the presence of redundant links, known as broadcast control.

In figure 10 an example of application of broadcast control can be seen. Let two stations (61 and 62) be connected by two two-way links (63 and 64), link (63) being the primary one for station (62). Let us assume that the ports associated in the station (62) are in forwarding state. If a packet arrives from the station (61) to station (62) and its destination is not found in the filtering tables, it must be forwarded by all the ports in forwarding state of this latter station except that by which it entered. This means that among the ports by which it will be sent will be the one corresponding to the link (64), with which it would return to the station (61), which is useless since the station (61) has already processed that packet. Moreover, it could happen that the station (61) also does not find the destination of the packet, therefore forwarding it via all its ports, which would imply a proliferation of packets, which is very damaging to the network.

But this drawback is solved with the use of broadcast control. In this example the station (61) has the identifier A and the station (62) the identifier B, and both make use of broadcast control with a list with two positions, in other words, they can store two port identifiers, which is more than sufficient for loops with aperimeter of two links.

In this case, when the frame leaves the station (61) via the link (63) it has to have the identifier A in the list. In figure 10 the list has been represented as two boxes in such a way that the most recent input is on the right. So, its content will be (X, A), where X is any identifier other than B. When the frame reaches B, a check is first of all made that the identifier of B is not on the list. As it is not, the packet is processed and the list is modified adding the identifier (B) of the station (62), and eliminating the more senior one, with which the list becomes (A, B).

In terms of the switching in itself, let us assume that the destination is not found, and for this reason the frame is forwarded via all the ports that are in forwarding state except that by which it has arrived. Obviously, it would not be sent via the port of the link (63), though it would via that of (64), with the broadcast control list containing the identifiers A and B (66).

When this frame arrives at the station (61), it will be immediately eliminated by the broadcast control since one of the identifiers of the list coincides with the identifier of the station (A). In this way, packet duplicates are avoided by means of using lists with a number of inputs equal to the perimeter of the loop, two in this case, as shown in figure 10.

Presented below is an example of embodiment of the filtering table with the specifications VLAN ID and input port. Let there be the following table, in which, for simplicity, the processing of ports is reduced to a list of ports by which the frame complying with the input specifications has to be sent.

**Table 1**

| Destination address | VLAN ID | Input port | Output ports |
|---|---|---|---|
| 07:08:76:45:66:22 | 6 | 2 | 3 |
| 76:A2:23:45:75:21 | 5 | 3 | 1 |
| 35:23:2F:48:76:31 | 2 | 3 | 1, 2, 4 |
| 07:08:76:45:66:22 | 2 | 1 | 2 |

Let us assume that frames with the following characteristics are processed: A first frame processed has the destination address 07:08:76:45:66:22, VLAN ID 2 and input port 1. In this case the address coincides with the first entry of the table but this entryis not applied since the VLAN ID and the input port do not coincide. The fourth input is indeed applied since all the values coincide, with which the frame will be sent via port 2. The second frame has as its destination address 01:01:01:01:01:01, VLAN ID 5 and input port 3. In this case, the values of VLAN ID and input port coincide with those of the second entry , but this entryis not applied since the destination address does not coincide. As the rest of the entriesare also not applied, the frame will be processed as if it had an unknown destination, with which it will be sent via all the ports less the one via which it arrived. The fram number three the destination address is 35:23:2F:48:76:31, VLAN ID 2 and input port 4. In this case, the address and the VLAN ID in the third entrycoincide, but this entrywill not be applied since the input port does not coincide. As the rest of the entriesare also not applied, the frame will be processed as if it had an unknown destination, with which it will be sent via all the ports less the one via which it arrived.

In the following example of embodiment, some positions of the table contain a value that corresponds to the first new value introduced in the section on description of the invention, from this moment on, the value "all". Let there be the following table, in which, for simplicity, the processing of ports is reduced to a list of ports by which the frame complying with the entry specifications has to be sent.

**Table 2**

| Destination address | VLAN ID | Input port | Output ports |
|---|---|---|---|
| 07:08:76:45:66:22 | 6 | all | 3 |
| All | 4 | 2 | 1 |
| 35:23:2F:48:76:31 | all | 3 | 1, 2, 4 |
| 06:33:43:73:32:18 | all | all | 2 |

The first entrywill be applied to all frames having destination address 07:08:76:45:66:22 and VLAN ID 6, independently of the input port. The second entrywill be applied to all frames having VLAN ID 4 and input port 2, independently of the destination address. The third input will be applied to all frames having destination address 35:23:2F:48:76:31 and input port 3, independently of VLAN ID. The fourth input will be applied to all frames having destination address 06:33:43:73:32:18 independently of their VLAN ID and of their the input port (note that this case is equivalent to one of standard 802.1D).

In the following example of embodiment, some of the positions of the filtering table contain the new value already presented earlier as value "not found" and which in the section on description of the invention is referred to as second new value.

**Table 3**

| Destination address | VLAN ID | Input port | Output ports |
|---|---|---|---|
| 07:08:76:45:66:22 | 6 | not found | 3 |
| not found | 4 | 2 | 1 |
| 35:23:2F:48:76:31 | not found | 3 | 1, 2, 4 |
| 06:33:43:73:32:18 | not found | not found | 2 |
| not found | 2 | 3 | 1 |
| not found | not found | not found | 1, 2, 3 |

In this case the first entry will be applied to all frames having destination address 07:08:76:45:66:22, VLAN ID 6 and as far as the input port is concerned it has to have a value "not found", in other words, a value which is not found in any of the port specifications of the remaining entries(excepting those with port "not found"), with the result that the input port for which this specification is applied is any one apart from 2 and 3. The second entry will be applied to all frames having VLAN ID 4 and input port 2, and whose destination address is not 07:08:76:45:66:22, nor 35:23:2F:48:76:31, nor 06:33:43:73:32:18, in other words, any destination address except those contained in the remaining entries. The third entry will be applied to all frames having destination address 35:23:2F:48:76:31, input port 3 and a VLAN ID that is not 6, nor 4 nor 2. The fourth entry will be applied to all frames having destination address 06:33:43:73:32:18 and a VLAN ID that is not 6 nor 4 nor 2 and an input port that is not 2 or 3. The fifth entry will be applied to all frames having VLAN ID 2 and input port 3, and whose destination address is not 07:08:76:45:66:22, nor 35:23:2F:48:76:31, nor 06:33:43:73:32:18, in other words, any destination address except those contained in the remaining entries. And finally the sixth entry will be applied to all frames for which none of the above inputs is applied.

Described below is an example of embodiment in which a point-multipoint link is used equivalent to other point-point links, for packets which have to be sent to various stations.

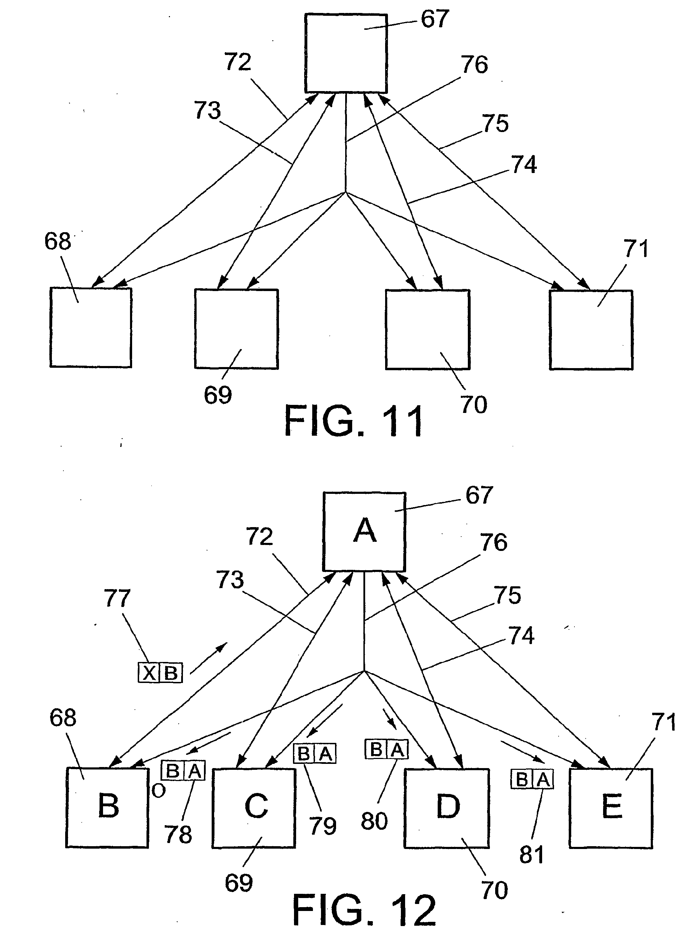

Let us assume the configuration that can be seen in figure 11. There exist five stations (67, 68, 69, 70 and 71). The station (67) is joined with the other four by means of four two-way point-point links (72, 73, 74 and 75), each of them being connected to a different station. There is also a point-multipoint link (76) which communicates the station (67) with the other four. The primary links will therefore be two-way (72, 73, 74 and 75) and the link (76) will be equivalent to these same links.

As far as the filtering tables are concerned, in this example of embodiment there exists an entry to be applied when the destination address is not found for any VLAN ID and input port, in such a way that the unknown address packets are sent via all the ports associated with primary ports, as shown in the following table, in which for reasons of simplicity the ports via which the frame has to be sent are indicated in the processing field, with the ports being identified with the same reference as the corresponding link:

**Table 4**

| Destination address | VLAN ID | Input port | Output ports |
|---|---|---|---|
| not found | all | all | 72, 73, 74, 75 |

Where said table complies with standard IEEE 802.1D.

In the same way there could also be an entry in the filtering table for addresses representing all accessible stations (broadcast), as shown below:

**Table 5**

| Destination address | VLAN ID | Input port | Output ports |
|---|---|---|---|
| not found | all | all | 72, 73, 74, 75 |
| BROADCAST | all | all | 72, 73, 74, 75 |

In this table it can be seen that appearing among the list of ports are those associated with the links (72, 73, 74 and 75) but link (76) does not appear, since it is not a primary link, thereby avoiding packet duplication.

However, in certain cases it can be advisable to modify this table. If there are no more links than those named, in a stable situation the ports (72, 73, 74 and 75) will be in a forwarding state. A management process can then be used to replace those ports with the equivalent point-multipoint port (76) leaving the table as shown:

**Table 6**

| Destination address | VLAN ID | Input port | Output ports |
|---|---|---|---|
| not found | all | all | 76 |
| BROADCAST | all | all | 76 |

In cases in which the sending by a single link is more efficient than sending by more than one, this operation can greatly increase the general performance of the system, as shown in figure 11.

Described below is the risk of duplication of packets for those whose destination is unknown for all switches. In terms of those originating in the station (67), there does not exist any risk since the link (76) is not associated with any primary link in the stations (68, 69, 70 and 71), due to being an incoming link only, and therefore the packets arriving via the link (76) will be treated by the stations receiving them as coming from the links (72, 73, 74 and 75), due to which they will in no case be forwarded, as established by the standard.

With regard to packets of unknown destination sent by the stations (68, 69, 70 and 71), duplicates will be avoided thanks to broadcast control, with a list containing two positions being sufficient, as shown in figure 12, in which the stations (67, 78, 69, 70 and 71) have A, B, C, D and E as identifiers, respectively. A packet originating in station (68) would have the identifier B in its broadcast control list. In the said figure, the list (77) has been represented as two boxes in such a way that the most recent input is on the right. So, its content will be (X, B), where X is any identifier different from A, B, C, D and E. On reaching the station (67), this packet would be forwarded by the link (76), with which four copies of the packet would arrive with broadcast control list (B, A) (78, 79, 80 and 81) at the stations (68), (69), (70) and (71), respectively. The station (68) will eliminate the copy reaching it since it will know that the packet has already passed through that station since it has its own identifier, namely, B, in the broadcast control list. On the other hand, the stations (69), (70) and (71) will accept the packet. The result of this is that the packet originally generated in B is distributed via all the stations shown with the duplicates being eliminated. As far as the packets generated by the stations (69), (70) and (71) are concerned, the result would be similar.

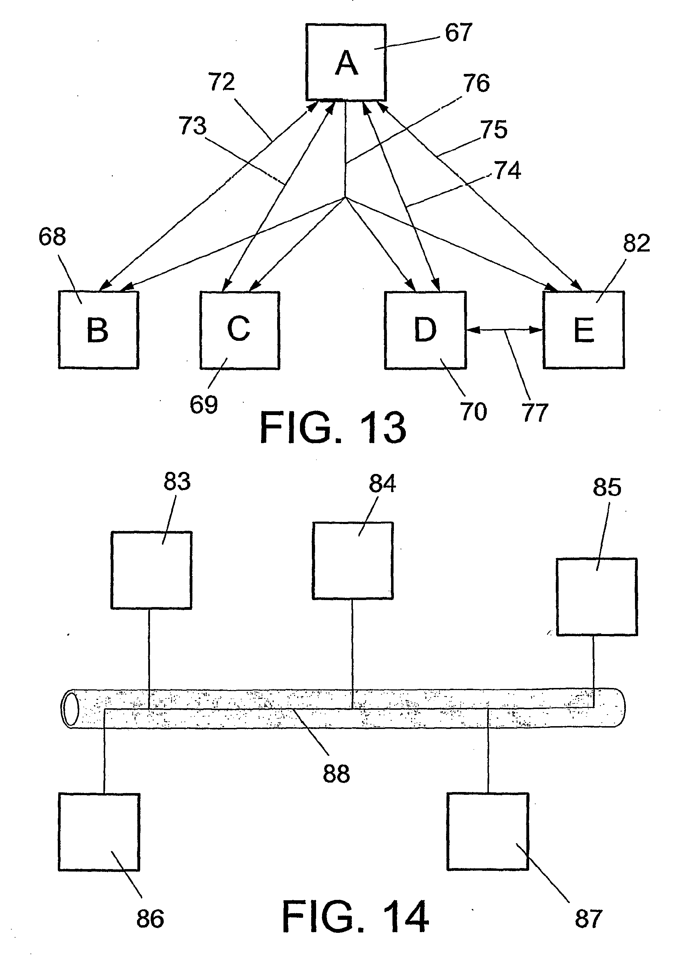

In a second example of embodiment where a point-multipoint link is used for packets destined for various stations, one starts with the same distribution of stations and links, with the proviso that there exists a further link between two stations, as shown in figure 13, in which there is a new link (82) between stations (70) and (71). In this example, three different scenarios can occur:
1. That in the spanning tree protocol the new link (82) is discarded. In this case the ports of the station (67) are not affected and the situation is analogous to the previous example.
2. That the spanning tree protocol in the station (71) determines that the port corresponding to the link (75) has to be in blocking state, with the port corresponding to the same link in the station (67) being in forwarding state. The situation in this station would be analogous to the previous example. In the station (71), moreover, all the packets sent by the station (67) via the link (76) will be eliminated on being received, since they will be processed as coming from the link (75), which has the corresponding port in blocking state. The packets which have to be sent from the station (67) to (71) will not use a direct link but will instead pass through the station (70) following the links (74) and (82) or the links (76) and (82).
3. That the spanning tree protocol in station (67) determines that the port corresponding to the link (75) remains in blocking state, with the port corresponding to the same link in the station (71) being in forwarding state. In that case there exist two possibilities in station (67):
   a. A first option, the more conservative, would consist of blocking the link (76) due to not having all its equivalent links in forwarding state. In that case, the process which replaced the primary ports for this link in the filtering table will have to restore the table to its original state, in other words, as shown in table 6, though the link (75) would not be used due to being in blocking state.
   b. If the use of all the primary links instead of the point-multipoint link implies a serious degradation of the performance of the system (due to having to use three links instead of one for the sending of a packet destined for all accessible stations), the port (76) can be kept in forwarding state and the filtering table would not be modified. In this case, packet duplication is avoided simply by sending a notification from the station (67) to (71) so that the latter ignores the packets arriving via the link (75). This would also include those arriving via the link (76) since they are treated in the station (71) as if they had come from the station (67).

In another example of embodiment, as shown in figure 14, the switch is applied to a bus topology, where the transmission medium permits communication between any two stations connected to that medium and, with a certain configuration, the invention can be made to behave in an equivalent form to standard IEEE 802.1D.

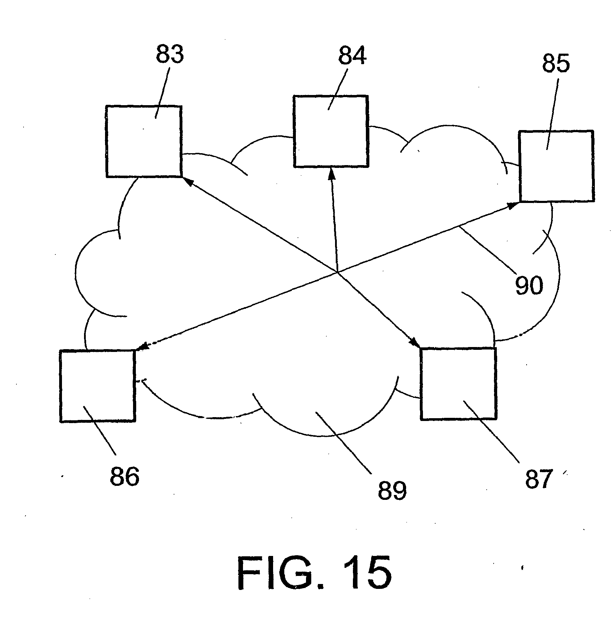

The bus (88) which communicates with the stations (83, 84, 85, 86 and 87) can be compared to a two-way multipoint link (90) among all the stations of a transmission medium (89), as can be seen in figure 15.

The link (90) would obviously be considered primary in all the stations, and on the ports associated with it the spanning tree protocol would be applied normally.

As far as broadcast control is concerned, its use would be unnecessary since there are no redundant links.

In terms of the filtering table, if it is required to be completely equivalent to a table of standard IEEE 802.1D, the dynamic entriesestablished by learning would simply be made to contain the value "all" in the input port and VLAN ID specifications, proceeding in the same way as with regard to static inputs and in no case using the value "not found". In this way a typical table could be like the one shown below:

**Table 7**

| Destination address | VLAN ID | Input port | Output ports |
|---|---|---|---|
| 07:08:76:45:66:22 | all | all | 3 |
| 35:23:2F:48:76:31 | all | all | 1 |
| 06:33:43:73:32:18 | all | all | 2 |

## Claims

1. **METHOD OF SWITCHING PACKETS IN A TRANSMISSION MEDIUM COMPRISING MULTIPLE STATIONS WHICH ARE CONNECTED USING DIFFERENT LINKS** by which switching of frames is carried out in level 2 of the OSI (Open System Interconnection) model of the ISO (International Standards Organisation), each station performs packet switching and said switching is done between one or more transmission media; **characterized in that**:
- in each of the transmission media different links are established which directly connect stations present **in that** transmission medium, where said stations have switching capacity;
- between any two stations various links are selectively established with different characteristics in the same transmission medium;
- it provides that the links, independently of their belonging to the same transmission medium, are selected from between one-way point-point and point-multipoint links;
- it establishes that a two-way point-point link is a set of links consisting of two one-way point-point links joining the same stations but in opposite directions;
- it establishes that a two-way multipoint-multipoint link between a set of stations is the union of as many point-multipoint links as there are stations belonging to that set, with each point-multipoint link having as its source each one of the stations of the set and as its destination the other stations of the set;
- it provides that the one-way links, independently of whether they belong to the same transmission medium, selectively have different characteristics of channel coding, security and quality of service independent of each other and dependent on the transmission medium; and
- in the frame switching process it provides for virtual ports in each switch, which are directly associated in a one-to-one way with the links which selectively provide transmission, and which are selected between two-way links, as established in standard IEEE (Institute of Electrical and Electronic Engineers) 802.1G, and one-way outgoing links.

2. **METHOD OF SWITCHING PACKETS IN A TRANSMISSION MEDIUM COMPRISING MULTIPLE STATIONS WHICH ARE CONNECTED USING DIFFERENT LINKS** according to claim 1, which is carried out in accordance with standard IEEE 802.1D, **characterized in that** it selects certain links as primary links which consist of the minimum two-way links necessary for connecting with each of the accessible stations; and it takes as the input port in the switching of each frame a port selected between the port associated with the link via which the frame has entered, always providing that said link is a primary link; and the port associated with the equivalent primary link, always providing that said link is not a primary link, that is to say, the port associated to the primary link that communicates to the station from where the frame came, so that if there exist at least two primary links which communicate with the station from where the frame came, a primary link is chosen selected from between the primary link whose associated port is in the forwarding state, if that link exists; and any link if there does not exist a primary link whose associated port is in forwarding state.

3. **METHOD OF SWITCHING PACKETS IN A TRANSMISSION MEDIUM COMPRISING MULTIPLE STATIONS WHICH ARE CONNECTED USING DIFFERENT LINKS** according to claim 2, **characterized in that** the ports associated with the primary links are for all purposes considered as connection ports to the local network and only on these ports is the spanning tree protocol applied in its entirety, as established in standard IEEE 802.1D, with the rest of the links being excluded from the sending of packets of the spanning tree protocol.

4. **METHOD OF SWITCHING PACKETS IN A TRANSMISSION MEDIUM COMPRISING MULTIPLE STATIONS WHICH ARE CONNECTED USING DIFFERENT LINKS** according to any of claims 2 or 3, in which the state of a port is selected from between blocking, listening, learning, forwarding and disabled; **characterized in that** the state of the port associated with a non-primary link of any type is equal to the most restrictive state, with regard to the sending and receiving of packets, of all the states of the ports of the primary links equivalent to that link, that is to say, of the states of the ports of the primary links that communicate with the same stations than said non-primary link, so that a non-primary link will form part of the tree if and only if the primary links equivalent to it form part of the tree.

5. **METHOD OF SWITCHING PACKETS IN A TRANSMISSION MEDIUM COMPRISING MULTIPLE STATIONS WHICH ARE CONNECTED USING DIFFERENT LINKS** according to claim 4, **characterized in that** the state of a port associated with a point to multipoint link is always forwarding, with the state of the ports associated with these same links being periodically communicated via the primary point to point links equivalent to said point-multipoint link, this information being processed by the destination stations; in which if they are informed that the port associated with the link in the source station is in blocking state selectively they perform an operation selected from between leaving the port via which they have received the information in listening state if the stations act as a switch; and eliminating the frames coming from the station with which the link communicates if the stations do not act as a switch; in order to thereby avoid processing in these stations of the packets sent by the point-multipoint port, since these are processed at destination as coming from the port associated with the equivalent primary link if the receiver station acts as a switch.

6. **METHOD OF SWITCHING PACKETS IN A TRANSMISSION MEDIUM COMPRISING MULTIPLE STATIONS WHICH ARE CONNECTED USING DIFFERENT LINKS** according to claim 1, **characterized in that** each frame incorporates a list of identifiers, where each identifier is associated one-to-one with a switch through which the frame has passed, this list being known as broadcast control information.

7. **METHOD OF SWITCHING PACKETS IN A TRANSMISSION MEDIUM COMPRISING MULTIPLE STATIONS WHICH ARE CONNECTED USING DIFFERENT LINKS** according to claim 6, **characterized in that** the switch eliminates the received frame when the identifier of that switch is found in the broadcast control information of that frame; in order to eliminate certain packets which, due to having been diffused via a network with loops, remain indefinitely **in that** network.

8. **METHOD OF SWITCHING PACKETS IN A TRANSMISSION MEDIUM COMPRISING MULTIPLE STATIONS WHICH ARE CONNECTED USING DIFFERENT LINKS** according to claim 6, **characterized in that** the switch adds its own identifier to the broadcast control information of the frame in the event that it does not find its own identifier in the broadcast control information of that frame.

9. **METHOD OF SWITCHING PACKETS IN A TRANSMISSION MEDIUM COMPRISING MULTIPLE STATIONS WHICH ARE CONNECTED USING DIFFERENT LINKS** according to claim 1, in which a consultation processing of a filtering table is carried out **characterized in that** two new specifications are incorporated into each of the static filtering table entriesf standard IEEE 802.1D, these specifications being that of input port, referring to the port through which the frame has entered, and the VLAN ID (Virtual Local Area Network Identification) specification, referring to the identifier of the VLAN to which the frame belongs, according to standard IEEE 802.1Q; the processing indicated by the port map of the entry of the table being applied if the frame, in addition to the specification established in the MAC (Medium Access Control) address of standard IEEE 802.1D, also complies with the cited specifications for input port and VLAN.

10. **METHOD OF SWITCHING PACKETS IN A TRANSMISSION MEDIUM COMPRISING MULTIPLE STATIONS WHICH ARE CONNECTED USING DIFFERENT LINKS** according to claim 9, **characterized in that** a first new value is used not present in the standard, in any of the specifications of the static entriesof the filtering table, for specifications selected between specifications of MAC address, input port and VLAN ID; so that when the value of that characteristic in a frame is compared with that of a specification which has said first new value, the comparison is always met, and consequently the specification is met and the processing which standard IEEE 802.1D establishes for the entryis applied.

11. **METHOD OF SWITCHING PACKETS IN A TRANSMISSION MEDIUM COMPRISING MULTIPLE STATIONS WHICH ARE CONNECTED USING DIFFERENT LINKS** according to claim 9, **characterized in that** a second new value is used not present in the standard, in any of the specifications of the static entries of the filtering table, so that when the characteristic of the frame is compared with that of a specification which has that second new value, the comparison is met, in other words, the specification is met, if the value in the frame does not coincide with that of any other specification of the table, with the exception of those containing the actual second new value, and the processing established in standard IEEE 802.1D is applied for positions found in the filtering table for entry.

12. **METHOD OF SWITCHING PACKETS IN A TRANSMISSION MEDIUM COMPRISING MULTIPLE STATIONS WHICH ARE CONNECTED USING DIFFERENT LINKS** according to any of claims 4, 5 or 11, **characterized in that** given an input in a table establishing the sending via more than one port, the destination ports of that input are selected among ports associated with primary links and ports associated with point-multipoint links equivalent to those primary links.
